# EUROPÄISCHE PATENTANMELDUNG

(11) **EP 4 503 402 A1**
(43) Veröffentlichungstag der Anmeldung: **05.02.2025**
(21) Anmeldenummer: 23189128.4
(22) Anmeldetag: 02.08.2023
(51) Int. Cl.: H02K 11/25, H02K 1/14, H02K 7/14

(54) **INTEGRIERTE TEMPERATURERFASSUNG AM STATORBLECHPAKET**

(71) Anmelder: Hilti Aktiengesellschaft, 9494 Schaan (LI)
(72) Erfinder: Lacher, Michael, 86830 Schwabmünchen (DE); Scherbaum, Markus, 86853 Gennach (DE)
(74) Vertreter: Hilti Aktiengesellschaft Corporate Intellectual Property

(57) **Zusammenfassung**

Elektromotor, insbesondere als Antrieb für eine Werkzeugmaschine, enthaltend eine Energieversorgung, einen Stator mit einem Statorblechpaket und einen relativ zu dem Statorblechpaket rotierbaren Rotor, eine Speichereinheit sowie eine Steuereinrichtung mit einer Vorrichtung zum Erfassen von Spannungswerten und einer Vorrichtung zum Erfassen von Stromstärkewerten.

An einer Außenmantelfläche des Statorblechpakets ist wenigstens eine Aussparung zur Aufnahme wenigstens eines temperaturabhängigen Widerstandselements enthalten, wobei das wenigstens eine Widerstandselement mit der Energieversorgung zum wahlweisen Anlegen einer elektrischen Spannung verbunden ist und durch die Vorrichtung zum Erfassen von Spannungswerten wenigstens ein Spannungswert und durch die Vorrichtung zum Erfassen von Stromstärkewerten wenigstens ein Stromstärkewert erfassbar ist, sodass wenigstens ein Widerstandswert des Widerstandselements ermittelbar ist, welcher durch Abgleich mit in der Speichereinheit hinterlegten Referenzwerten zum Bestimmen wenigstens eines Temperaturwertes verwendbar ist.

## Beschreibung

Die vorliegende Erfindung betrifft einen Elektromotor, insbesondere als Antrieb für eine Werkzeugmaschine, enthaltend eine Energieversorgung, einen Stator mit einem Statorblechpaket und einen relativ zu dem Statorblechpaket rotierbaren Rotor, eine Speichereinheit sowie eine Steuereinrichtung mit einer Vorrichtung zum Erfassen von Spannungswerten und einer Vorrichtung zum Erfassen von Stromstärkewerten.

Des Weiteren betrifft die vorliegende Erfindung einen Stator für einen Elektromotor.

Darüber hinaus betrifft die vorliegende Erfindung eine Werkzeugmaschine mit einem Elektromotor.

Ferner betrifft die vorliegende Erfindung eines Verfahren zum Bestimmen eines Temperaturwertes an einem Elektromotor enthaltend eine Energieversorgung, einen Stator mit einem Statorblechpaket und einen relativ zu dem Statorblechpaket rotierbaren Rotor sowie eine Steuereinrichtung mit einer Vorrichtung zum Erfassen von Spannungswerten und einer Vorrichtung zum Erfassen von Stromstärkewerten, wobei an einer Außenmantelfläche des Statorblechpakets wenigstens eine Aussparung zur Aufnahme wenigstens einer Spulenwicklung enthalten ist.

Aus dem Stand der Technik sind Elektromotoren (insbesondere als Antrieb für Werkzeugmaschinen) bekannt, die zum Erzeugen eines Drehmoments im Wesentlichen einen Stator und einen relativ zu dem Stator drehbaren Rotor enthalten. Zum Erfassen von Temperaturwerten ist eine Vorrichtung zur Temperaturerfassung für gewöhnlich an dem Stator des Elektromotors vorgesehen.

Bisher am Markt erhältliche und insbesondere aus dem Stand der Technik bekannte Temperaturerfassungsvorrichtungen weisen oftmals das Problem auf, das diese relativ groß sind und zudem auch eine gewisse Komplexität aufweisen.

Es ist damit Aufgabe der vorliegenden Erfindung das vorstehend beschriebene Problem zu lösen.

Die Aufgabe wird gelöst durch den Gegenstand des unabhängigen Patentanspruchs 1, 9, 10 und 11.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch einen Elektromotor, insbesondere als Antrieb für eine Werkzeugmaschine, enthaltend eine Energieversorgung, einen Stator mit einem Statorblechpaket und einen relativ zu dem Statorblechpaket rotierbaren Rotor sowie eine Steuereinrichtung mit einer Vorrichtung zum Erfassen von Spannungswerten und einer Vorrichtung zum Erfassen von Stromstärkewerten.

Erfindungsgemäß ist vorgesehen, dass an einer Außenmantelfläche des Statorblechpakets wenigstens eine Aussparung zur Aufnahme wenigstens eines temperaturabhängigen Widerstandselements enthalten ist, wobei das wenigstens eine Widerstandselement mit der Energieversorgung zum wahlweisen Anlegen einer elektrischen Spannung verbunden ist und durch die Vorrichtung zum Erfassen von Spannungswerten wenigstens ein Spannungswert und durch die Vorrichtung zum Erfassen von Stromstärkewerten wenigstens ein Stromstärkewert erfassbar ist, sodass wenigstens ein Widerstandswert des Widerstandselements ermittelbar ist, welcher durch Abgleich mit in der Speichereinheit hinterlegten Referenzwerten zum Bestimmen wenigstens eines Temperaturwertes verwendbar ist.

Bei dem temperaturabhängigen Widerstandselement handelt sich um einen elektrischen Widerstand, dessen Widerstandswert sich mit der Temperatur reproduzierbar ändert. Das temperaturabhängige Widerstandselement kann dabei auch als Thermistor bezeichnet werden. Das temperaturabhängige Widerstandselement kann zudem als Heißleiter ausgestaltet sein, welcher über einen negativen Temperaturkoeffizienten (NTC) verfügt und bei hohen Temperaturen besser elektrisch leitet als bei niedrigen Temperaturen.

Alternativ kann das temperaturabhängige Widerstandselement auch als Kaltleiter ausgestaltet sein, welcher über einen positiven Temperaturkoeffizienten (PTC) verfügt und bei niedrigen Temperaturen besser elektrisch leitet als bei hohen Temperaturen.

Entsprechend einer alternativen Ausführungsform kann es möglich sein, dass das wenigstens eine temperaturabhängige Widerstandselement in Form einer Spulenwicklung ausgestaltet ist.

Gemäß einer weiteren alternativen Ausführungsform kann es möglich sein, dass die wenigstens eine Aussparung zumindest teilweise axial zu einer Statorachse verläuft.

Entsprechend einer weiteren alternativen Ausführungsform kann es möglich sein, dass die wenigstens eine Aussparung in einer radialen Ausrichtung zu einem Polzahn des Stators positioniert ist.

Gemäß einer weiteren alternativen Ausführungsform kann es möglich sein, dass in radialer Ausrichtung zu jedem Polzahn eine Aussparung positioniert ist.

Entsprechend einer weiteren alternativen Ausführungsform kann es möglich sein, dass die wenigstens eine Aussparung wenigstens teilweise mit einem Verbindungsmaterial befüllt ist.

Gemäß einer weiteren alternativen Ausführungsform kann es möglich sein, dass das Verbindungsmaterial wenigstens teilweise als Duroplast oder keramischer Mörtel ausgestaltet ist.

Entsprechend einer weiteren alternativen Ausführungsform kann es möglich sein, dass das wenigstens eine temperaturabhängige Widerstandselement als Hochlastwiderstand ausgestaltet ist.

Des Weiteren wird die Aufgabe gelöst durch einen Stator für einen Elektromotor.

Darüber hinaus wird die Aufgabe gelöst durch eine Werkzeugmaschine mit einem Elektromotor.

Ferner wird die Aufgabe gelöst durch das Verfahren zum Bestimmen eines Temperaturwertes an einem Elektromotor enthaltend eine Energieversorgung, einen Stator mit einem Statorblechpaket und einen relativ zu dem Statorblechpaket rotierbaren Rotor, eine Speichereinheit sowie eine Steuereinrichtung mit einer Vorrichtung zum Erfassen von Spannungswerten und einer Vorrichtung zum Erfassen von Stromstärkewerten, wobei an einer Außenmantelfläche des Statorblechpakets wenigstens eine Aussparung zur Aufnahme wenigstens eines temperaturabhängigen Widerstandselements enthalten ist.

Erfindungsgemäß sind die folgenden Verfahrensschritte enthalten
- Anlegen einer elektrischen Spannung an das Widerstandselement durch die Energieversorgung;
- Erfassen eines Spannungswerts durch die Vorrichtung zum Erfassen von Spannungswerten;
- Erfassen eines Stromstärkewerts durch die Vorrichtung zum Erfassen von Stromstärkewerten;
- Ermitteln eines Widerstandswerts als Quotient aus dem Spannungswert sowie dem Stromstärkewert; und
- Bestimmen eines Temperaturwertes durch Abgleich des Widerstands mit in der Speichereinheit hinterlegten Referenzwerten.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine erfindungsgemäße Werkzeugmaschine gemäß einer beispielhaften Ausführungsform mit einem Elektromotor;
- Figur 2: eine perspektivische Ansicht auf ein Statorblechpaket mit Aussparungen und Widerstandselementen;
- Figur 3: eine Topansicht auf einen Stator und Rotor;
- Figur 4: eine Detailansicht auf das Statorblechpaket mit einer Vertiefung und einem Widerstandselement gemäß einem ersten Ausführungsbeispiel;
- Figur 5: eine Detailansicht auf das Statorblechpaket mit einer Vertiefung und einem Widerstandselement gemäß einem zweiten Ausführungsbeispiel;
- Figur 6: eine Detailansicht auf das Statorblechpaket mit einer Vertiefung und einem Widerstandselement gemäß einem dritten Ausführungsbeispiel; und
- Figur 7: eine Detailansicht auf das Statorblechpaket mit einer Vertiefung und einem Widerstandselement gemäß einem vierten Ausführungsbeispiel.

### Ausführungsbeispiele:

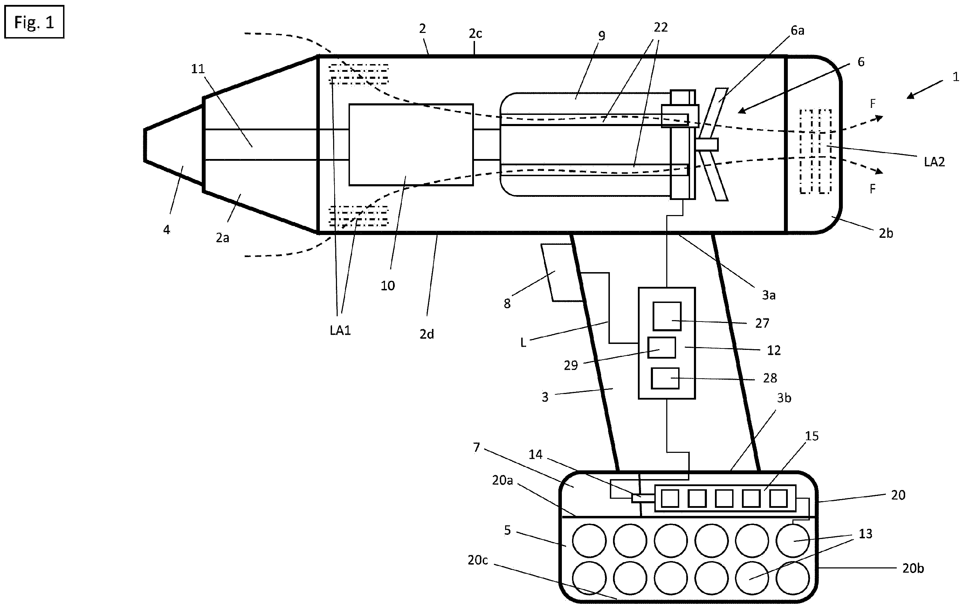

Figur 1 zeigt eine Werkzeugmaschine 1 gemäß einer beispielhaften Ausführungsform. Die Werkzeugmaschine 1 ist in Form einer akkubetriebenen Bohrmaschine ausgestaltet.

Gemäß einem alternativen Ausführungsbeispiel kann die Werkzeugmaschine auch in Form einer Säge, eines Schleifgeräts, eines Bohrhammers oder dergleichen ausgestaltet sein.

Die als Bohrmaschine ausgestaltete Werkzeugmaschine 1 enthält dabei im Wesentlichen ein Gehäuse 2, einen Handgriff 3, eine Werkzeugaufnahme 4 und eine Energieversorgung 5.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert. Die Werkzeugaufnahme 4 dient zum Aufnehmen und Halten eines Werkzeugs. In den Figuren ist das Werkzeug nicht dargestellt.

In dem vorliegenden Ausführungsbeispiel kann das Werkzeug in Form eines Bohrers ausgestaltet. An dem unteren Ende 2d des Gehäuses 2 ist ein erstes Ende 3a des Handgriffs 3 positioniert. An dem zweiten Ende 3b des Handgriffs 3 ist eine Akku-Schnittstelle 7 vorgesehen.

Wie in Figur 1 gezeigt weist der Handgriff 3 einen Aktivierungsschalter 8 auf, mit dem die Werkzeugmaschine 1 in einen Aktivierungszustand oder Deaktivierungszustand eingestellt werden kann.

An die Akku-Schnittstelle 7 kann die Energieversorgung 5 wiederlösbar befestigt werden. In dem vorliegenden Ausführungsbeispiel ist die Energieversorgung 5 in Form eines Akkumulators ausgestaltete. Die Energieversorgung 5 dient zum Versorgen der Werkzeugmaschine mit elektrischer Energie.

Entsprechend einem alternativen Ausführungsbeispiel kann die Energieversorgung 5 auch als Stromkabel zum Verbinden der Werkzeugmaschine 1 mit einer Netzstromquelle (Steckdose) ausgestaltet sein. Die als Stromkabel ausgestaltete Energieversorgung 5 ist in den Figuren nicht dargestellt.

Im Inneren des Gehäuses 2 ist im Wesentlichen ein Elektromotor 9 als Antrieb, eine Getriebevorrichtung 10, eine Antriebswelle 11, eine Lüftungseinrichtung 6 und eine Steuereinrichtung 12 positioniert.

Der Elektromotor 9, die Getriebevorrichtung 10, die Antriebswelle 11 und die Werkzeugaufnahme 4 sind so im Inneren des Gehäuses 2 zueinander angeordnet, dass ein in dem Elektromotor 9 erzeugtes Drehmoment auf die Getriebevorrichtung 10, die Antriebswelle 11 und schließlich auf die Werkzeugaufnahme 4 bzw. auf das Werkzeug übertragen werden kann.

Die Steuereinrichtung 12 ist mittels entsprechenden Leitungen L mit dem Aktivierungsschalter 8, der Akku-Schnittstelle 7 und dem Elektromotor 9 verbunden.

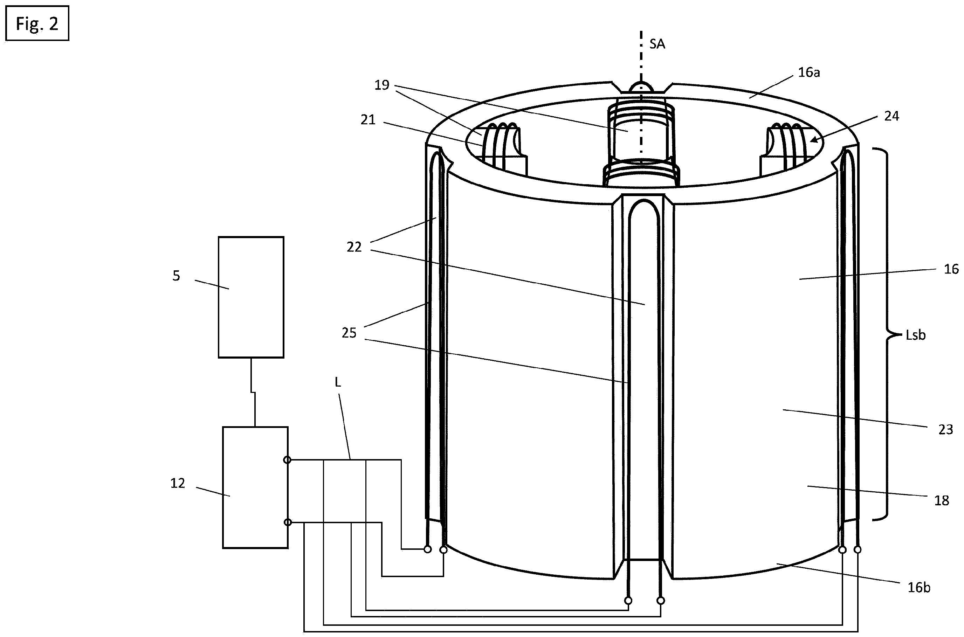

Der Elektromotor 9 ist in Form eines bürstenlosen Elektromotors ausgestaltet und enthält im Wesentlichen einen Stator 16 und einen Rotor 17, vgl. Figur 2.

An einem hinteren Ende des Stators 16 ist die Lüftungseinrichtung 6 in Form eines Lüfterrads 6a so positioniert, dass das Lüftungsrad 6a durch den Rotor 17 angetrieben wird. Wie in Figur 1 angedeutet, sind an dem vorderen Ende 2a des Gehäuses 2 Lüftungseinlässe LA1 und an dem hinteren Ende 2b des Gehäuses 2 Lüftungsauslässe LA2 vorgesehen. Wenn das Lüfterrad 6a durch den Rotor 17 angetrieben ist, wird ein Lüftungsstrom F durch das Gehäuse 2 erzeugt zum Abtransport einer Abwärme an der Oberfläche des Stators 16.

Die als Akkumulator ausgestaltete Energieversorgung 5 kann mit der Werkzeugmaschine 1 wiederlösbar verbunden werden, um die Werkzeugmaschine 1 mit elektrischer Energie zu versorgen. Der Akkumulator 5 enthält im Wesentlichen ein Akku-Gehäuse 20, eine Anzahl an Energiespeicherzellen 13, eine Akku-Schnittstelle 14 sowie eine Steuerungseinrichtung 15.

Die Energiespeicherzellen 13 können auch als Akku-Zellen bezeichnet werden und sind im Inneren des Akku-Gehäuses 20 angeordnet.

Das Akku-Gehäuse 20 enthält dabei im Wesentlichen ein Deckelelement 20a, vier Seitenwände 20b und ein Bodenelement 20c.

Die Akku-Schnittstelle 14 ist an der Außenseite des Deckelelements 20a angeordnet und dient zum elektrischen bzw. elektronischen sowie mechanischen Verbinden des Akkumulators 5 mit der Werkzeugmaschine 1 oder einer Ladevorrichtung.

Die Ladevorrichtung dient zum Laden des Akkumulators 5 mit elektrischer Energie und ist in den Figuren nicht dargestellt.

Zum elektrischen bzw. elektronischen Verbinden weist die Akku-Schnittstelle 14 einen Pluskontakt, einen Minuskontakt und einen Kommunikationskontakt auf. Der Plus- und Minuskontakt dient zur Erzeugen eines Stromkreises, wenn der Akkumulator 5 mit einer Werkzeugmaschine 1 oder einer Ladevorrichtung verbunden ist. Der Kommunikationskontakt dient zum Senden und Empfangen von Daten sowie Informationen in Form von elektrischen Signalen.

Alternativ oder zusätzlich kann der Akkumulator 5 auch eine Funkkommunikation (z.B. Bluetooth) bzw. drahtlose Kommunikation enthalten.

Die Energiespeicherzellen 13 dienen zum Aufnehmen, Speichern und erneuten Abgeben elektrischer Energie. Die Energiespeicherzellen 13 sind in zylindrischer Form sowie auf Basis einer Lithium-lonen-Technologie ausgestaltet. Jede Energiespeicherzelle 13 enthält an einem Ende eine Kontakteinrichtung, die zur Übertragung elektrischer Energie dient. Die einzelnen Kontakteinrichtung sind über entsprechende Leitungen mit der Steuerungseinrichtung 15 des Akkumulators 5 verbunden.

Alternativ können die Energiespeicherzellen 13 auch auf einer anderen geeigneten Technologie basieren.

Die zylindrische Form der Energiespeicherzellen 13 ist ebenfalls optional, sodass auch jede andere geeignete Form bzw. Geometrie gewählt werden kann. So ist es insbesondere auch möglich, dass die Energiespeicherzellen 13 als Pouchzellen ausgestaltet sind.

Es ist zudem auch möglich, dass der Akkumulator 5 sowohl zylindrische Energiespeicherzellen 13 als auch Pouch-Zellen enthält. Es ist insbesondere möglich, dass der Akkumulator 5 lediglich eine einzige zylindrische Energiespeicherzelle 13 und eine einzige Pouchzelle enthält.

Die Steuerungseinrichtung 15 regelt und steuert verschiedene Funktionen des Akkumulators 5. Zu den Funktion gehört unter anderen die Steuerung der Aufnahme und Abgabe von elektrischer Energie in bzw. aus den Energiespeicherzellen 13. Darüber hinaus wird mit Hilfe der Steuerungseinrichtung 15 die Menge an elektrischer Energie gesteuert, die von den Energiespeicherzellen 13 aufgenommen oder abgegeben werden sollen.

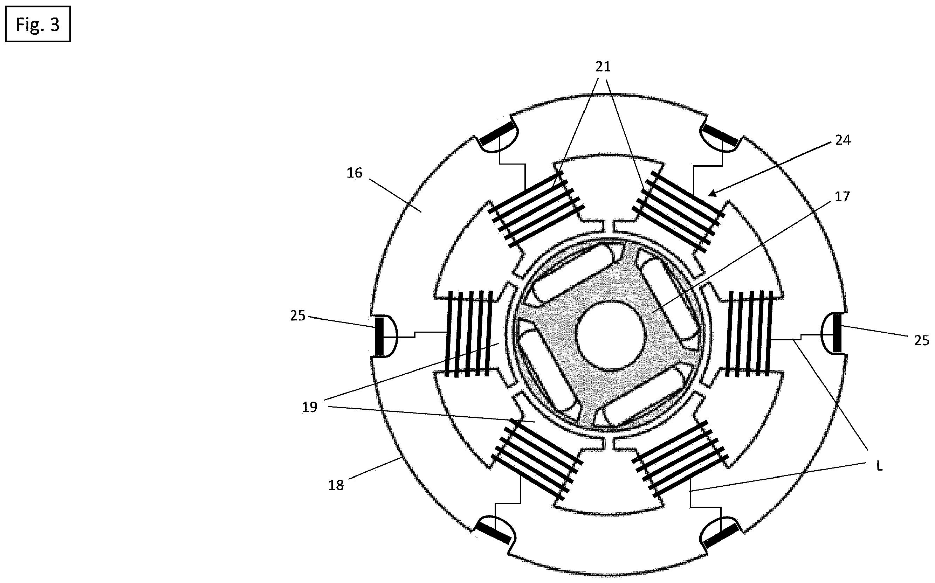

Wie in Figur 3 angedeutet ist der Rotor 17 im Inneren des Stators 16 positioniert und zudem drehbar zu dem Stator 16 ausgestaltet.

Wie in Figur 2 gezeigt enthält der Stator 16 ein Statorblechpaket 18 mit vier radial nach innen gerichtete Polzähne. Das Statorblechpaket 18 besteht im Wesentlichen aus einer Anzahl an übereinander gestapelten Profilblechen 19.

Es sind jeweils zwei Polzähne 19 einander gegenüber positioniert. Gemäß einer alternativen Ausführungsform können auch mehr als vier Polzähne 19 vorgesehen sein. Die Polzähne 19 dienen zum jeweiligen Aufnehmen eines Spulendrahts 21 zum Erzeugen einer Spule 24. Die Spulen 24 sind entsprechend über die Steuereinrichtung 12 mit der Energieversorgung 5 verbunden, um eine elektrische Spannung an die Spulen 24 anzulegen. Mit anderen Worten: die Spulen 24 werden bestromt. Mit Hilfe der Spulen 24 wird ein abwechselndes Magnetfeld MF erzeugt, durch welches der Rotor 17 gedreht wird.

An einer Außenmantelfläche 23 des Statorblechpakets ist eine Anzahl an axial zu einer Statorachse SA verlaufende Aussparung positioniert. In Figur 2 ist ein Statorblechpaket gemäß einem ersten Ausführungsbeispiel mit vier Aussparung gezeigt.

Gemäß einem zweiten Ausführungsbeispiel hat das Statorblechpaket sechs Aussparung, vgl. Figur 3.

Entsprechend einem alternativen Ausführungsbeispiel kann das Statorblechpaket mehr als sechs Polzähne 19 sowie mehr als sechs Aussparung 22 enthalten. Die Anzahl an Polzähnen 19 und Aussparung 22 müssen dabei nicht gleich sein.

Wie in den Figuren 2 und 3 zu erkennen ist, sind die Aussparungen 22 gemäß dem ersten und zweiten Ausführungsbeispiel an der Außenmantelfläche 23 mit den Polzähnen 19 entsprechend ausgerichtet. Mit anderen Worten: eine Aussparung 22 befindet sich in radialer Ausrichtung zu einem Polzahn 19. Wie nachfolgend noch beschrieben, kann eine Aussparung 22 in radialer Ausrichtung auch zwischen zwei benachbarten Polzähnen 19 positioniert sein. Gemäß den gezeigten Ausführungsbeispielen erstrecken sich die Aussparungen 22 über die gesamte Länge L des Statorblechpakets18. Länge einer Aussparung 22 entspricht damit der Länge Lsb des Statorblechpakets 18.

Es ist entsprechend einem alternativen, in den Figuren nicht dargestellten Ausführungsbeispiel auch möglich, dass ein oder mehrere Aussparungen 22 kürzer sind als das Statorblechpaket 18, wodurch sich ein oder mehrere Aussparungen 22 nicht über die gesamte Länge Lsb des Statorblechpakets 18 erstrecken.

Wie in den Figuren angedeutet dient eine Aussparung 22 zur Aufnahme eines temperaturabhängigen Widerstandselements 25. In dem vorliegenden Ausführungsbeispiel ist das temperaturabhängige Widerstandselement 25 in Form einer Spulenwicklung ausgestaltet.

Alternativ kann das temperaturabhängige Widerstandselement 25 auch in Form eines Schichtwiderstands, Folienwiderstands, Massewiderstands, Drahtwiderstands oder Potentiometer ausgestaltet sein.

Jedes als Spulenwicklung ausgestaltete Widerstandselement 25 ist über die Steuereinrichtung mit der Energieversorgung 5 verbunden, um eine elektrische Spannung an die Spulenwicklung anzulegen. Alternativ ist das als Spulenwicklung ausgestaltete Widerstandselement 25 auch direkt (d.h. unmittelbar) mit der Energieversorgung 5 verbunden.

Darüber hinaus ist jedes als Spulenwicklung ausgestaltete Widerstandselement 25 mit einer Vorrichtung zum Erfassen von Spannungswerten 27 verbunden und dient zum Erfassen von Spannungswerten an dem jeweiligen Widerstandselement 25. Des Weiteren ist jede Spulenwicklung mit einer Vorrichtung 28 zum Erfassen von Stromstärkewerten verbunden und dient wiederum zum Erfassen von Stromstärkewerten an dem jeweiligen Widerstandselement 25. Wie vorstehend bereits erwähnt ist die Steuereinrichtung 12 mit der Vorrichtung 27 zum Erfassen von Spannungswerten sowie der Vorrichtung 28 zum Erfassen von Stromstärkewerten so verbunden, dass die von den jeweiligen Vorrichtungen erfassten Werte (Volt oder Ampere) an die Steuereinrichtung 12 gesendet werden können.

Zur Durchführung des Verfahren zum Bestimmen eines Temperaturwertes an der Manteloberfläche des Stators 16 wird zunächst mit Hilfe der Energieversorgung 5 eine elektrische Spannung an mindestens ein temperaturabhängiges Widerstandselement 25 angelegt.

Durch die Vorrichtung 27 zum Erfassen von Spannungswerten wird ein Spannungswert an dem Widerstandselement 25 erfasst. Des Weiteren wird durch die Vorrichtung 28 zum Erfassen von Stromstärkewerten ein Stromstärkewert an dem Widerstandselement 25 erfasst. Sowohl der erfasste Spannungswert als auch der erfasste Stromstärkewert wird an die Steuereinrichtung 12 übermittelt. Der in regelmäßigen oder auch in unregelmäßigen Zeitabständen können mehrere Spannungswert und Stromstärkewerte erfasst und an die Steuereinrichtung 12 gesendet werden. Der Zeitabstand zum Erfassen von Spannungswerten und Stromstärkewerten kann beispielsweise zehn Sekunden betragen. Alternativ kann der Zeitabstand auch mehr oder weniger als zehn Sekunden betragen.

Mit Hilfe des übermittelten Spannungswerts und Stromstärkewerts kann die Steuereinrichtung 12 einen Widerstandswert für das temperaturabhängige Widerstandselement 25 ermitteln. In einer Speichereinheit 29 sind Referenzwerte in Form von Look-Up-Tabellen hinterlegt (d.h. gespeichert), die das Verhältnis zwischen dem elektrischen Widerstand und der Temperatur des jeweils verwendeten Werkstoffs des Widerstandselements 25 darlegen. Durch einen Abgleich des ermittelten Widerstandswertes mit den Referenzwerten wird die jeweilige Temperatur des Widerstandselements 25 bestimmt. Da sich das Widerstandselement 25 in unmittelbarer Nähe bzw. in Kontakt mit der Außenmantelfläche 23 des Statorblechpakets 18 befindet, entspricht die Temperatur des Widerstandselements 25 auch der Temperatur des Außenmantelfläche 23 des Statorblechpakets 18.

Entsprechend einem weiteren alternativen Ausführungsbeispiel ist es auch möglich, dass sich nicht in jeder Aussparung 22 ein Widerstandselement 25 befindet. Vorzugsweise befinden sich in zwei gegenüberliegenden Aussparungen jeweils eine Spulenwicklung.

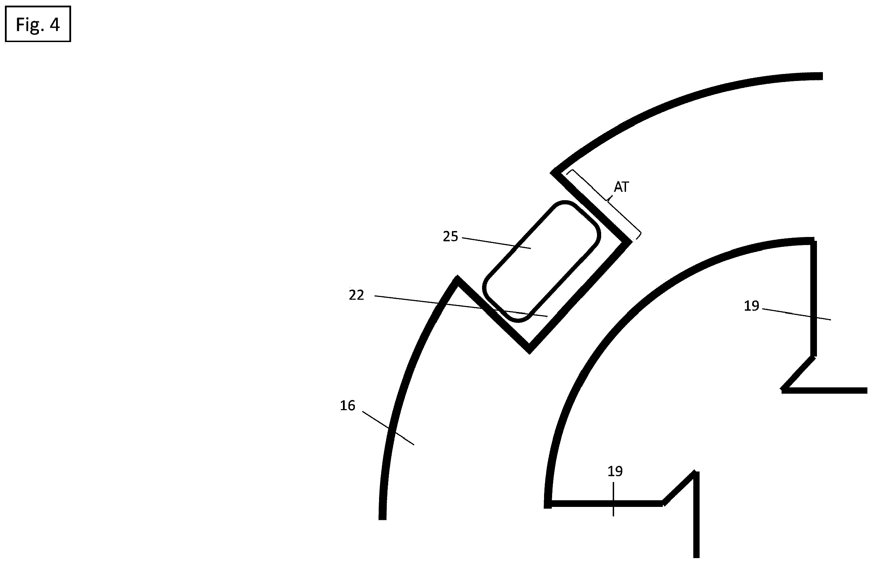

In Figur 4 ist eine Detailansicht auf das Statorblechpaket 18 mit einer Aussparung 22 und einem Widerstandselement 25 gemäß einem ersten Ausführungsbeispiel gezeigt. Wie zu erkennen ist, befindet sich die Aussparung 22 mit einem Widerstandselement 25 zwischen zwei benachbarten Polzähnen 19.

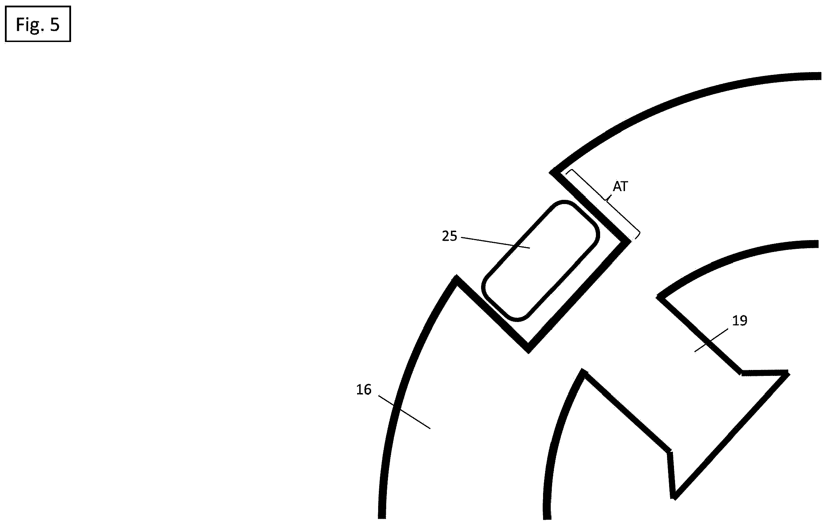

In Figur 5 ist eine Detailansicht auf das Statorblechpaket 18 mit einer Aussparung 22 und einem Widerstandselement 25 gemäß einem zweiten Ausführungsbeispiel gezeigt. Wie zu erkennen ist, befindet sich die Aussparung 22 mit einem Widerstandselement 25 in radialer Ausrichtung zu einem Polzahn 19.

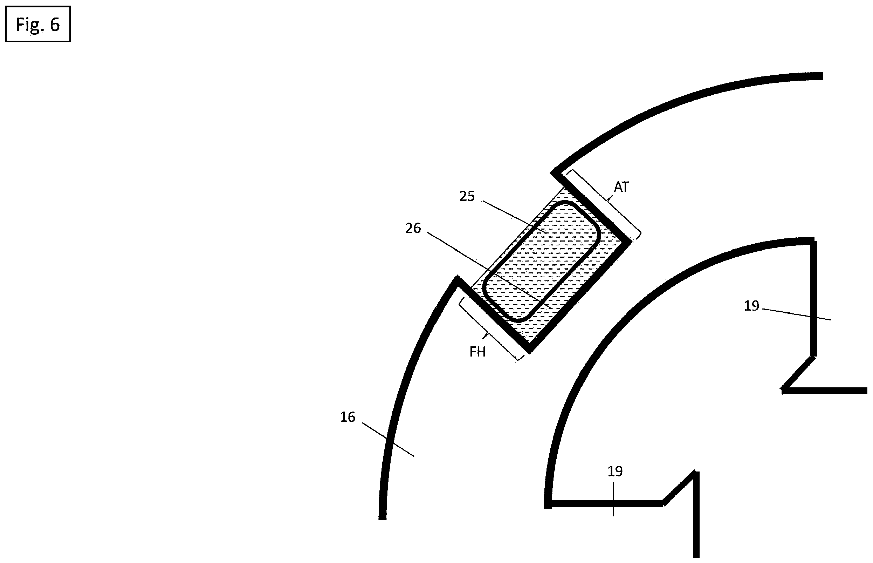

In Figur 6 ist eine Detailansicht auf das Statorblechpaket 18 mit einer Aussparung und einem Widerstandselement 25 gemäß einem dritten Ausführungsbeispiel gezeigt. Wie zu erkennen ist, befindet sich die Aussparung mit einem Widerstandselement 25 zwischen zwei benachbarten Polzähnen 19. Die Aussparung 22 ist mit einem Duroplast als Verbindungsmaterial 26 nahezu vollständig gefüllt. Wie in Figur 6 angedeutet ist die Füllhöhe FH des Verbindungsmaterials 26 geringer als die Tiefe AT der Aussparung 22.

Gemäß einer alternativen Ausführungsform kann die Füllhöhe FH des Verbindungsmaterials 26 der Tiefe AT der Aussparung 22 entsprechen.

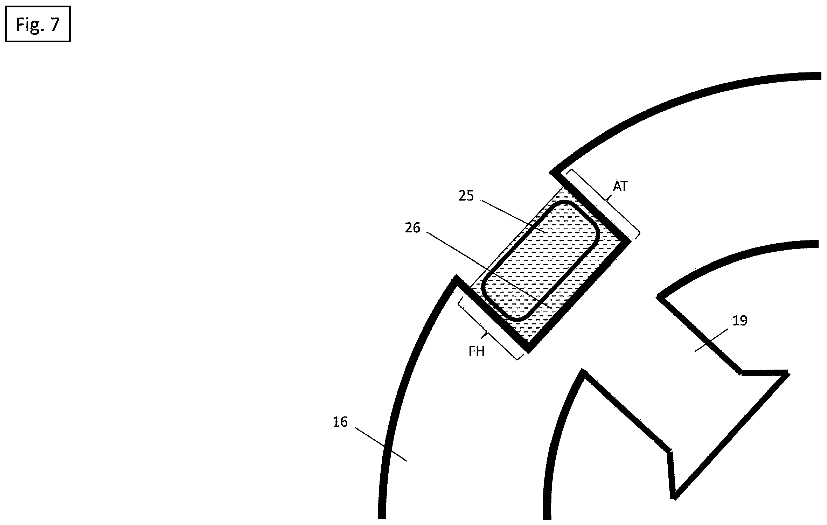

In Figur 7 ist eine Detailansicht auf das Statorblechpaket 18 mit einer Aussparung 22 und einem Widerstandselement 25 gemäß einem vierten Ausführungsbeispiel gezeigt. Wie zu erkennen ist, befindet sich die Aussparung 22 mit einem Widerstandselement 25 in radialer Ausrichtung zu einem Polzahn 19. Die Aussparung 22 ist mit einem Duroplast als Verbindungsmaterial 26 nahezu vollständig gefüllt. Wie in Figur 6 angedeutet ist die Füllhöhe FH des Verbindungsmaterials 26 geringer als die Tiefe AT der Aussparung 22.

Gemäß einer alternativen Ausführungsform kann die Füllhöhe FH des Verbindungsmaterials 26 der Tiefe AT der Aussparung 22 entsprechen.

### Bezugszeichen

- 1: Werkzeugmaschine
- 2: Gehäuse
- 2a: vorderes Ende des Gehäuses
- 2b: hinteres Ende des Gehäuses
- 2c: oberes Ende des Gehäuses
- 2d: unteres Ende des Gehäuses
- 3: Handgriff
- 3a: erstes Ende des Handgriffs
- 3b: zweites Ende des Handgriffs
- 4: Werkzeugaufnahme
- 5: Energieversorgung
- 6: Lüftungseinrichtung
- 6a: Lüfterrad
- 7: Akku-Schnittstelle
- 8: Aktivierungsschalter
- 9: Elektromotor
- 10: Getriebevorrichtung
- 11: Antriebswelle
- 12: Steuereinrichtung
- 13: Energiespeicherzelle
- 14: Akku-Schnittstelle
- 15: Steuerungseinrichtung
- 16: Stator
- 16a: oberes Ende des Stators
- 16b: unteres Ende des Stators
- 17: Rotor
- 18: Statorblechpaket
- 19: Polzahn
- 20: Akku-Gehäuse
- 20a: Deckelelement
- 20b: Seitenwand
- 20c: Bodenelement
- 21: Spulendraht
- 22: Aussparung
- 23: Außenmantelfläche des Statorblechpakets
- 24: Spule
- 25: Widerstandselement
- 26: Verbindungsmaterial
- 27: Vorrichtung zum Erfassen von Spannungswerten
- 28: Vorrichtung zum Erfassen von Stromstärkewerten
- 29: Speichereinheit

- LA1: Lüftungseinlass
- LA2: Lüftungsauslass
- F: Lüftungsstrom
- Lsb: Länge des Statorblechpakets
- L: Leitung
- SA: Statorachse
- FH: Füllhöhe des Verbindungsmaterials
- AT: Tiefe der Aussparung

## Patentansprüche

1. Elektromotor (9), insbesondere als Antrieb für eine Werkzeugmaschine (1), enthaltend eine Energieversorgung (5), einen Stator (16) mit einem Statorblechpaket (18) und einen relativ zu dem Statorblechpaket (18) rotierbaren Rotor (17), eine Speichereinheit (29) sowie eine Steuereinrichtung (12) mit einer Vorrichtung (27) zum Erfassen von Spannungswerten und einer Vorrichtung (28) zum Erfassen von Stromstärkewerten,
**dadurch gekennzeichnet, dass** an einer Außenmantelfläche (23) des Statorblechpakets (18) wenigstens eine Aussparung (22) zur Aufnahme wenigstens eines temperaturabhängigen Widerstandselements (25) enthalten ist, wobei das wenigstens eine Widerstandselement (25) mit der Energieversorgung (5) zum wahlweisen Anlegen einer elektrischen Spannung verbunden ist und durch die Vorrichtung (27) zum Erfassen von Spannungswerten wenigstens ein Spannungswert und durch die Vorrichtung (28) zum Erfassen von Stromstärkewerten wenigstens ein Stromstärkewert erfassbar ist, sodass wenigstens ein Widerstandswert des Widerstandselements (25) ermittelbar ist, welcher durch Abgleich mit in der Speichereinheit (29) hinterlegten Referenzwerten zum Bestimmen wenigstens eines Temperaturwertes verwendbar ist.

2. Elektromotor (9) nach Anspruch 1,
**dadurch gekennzeichnet, dass** das wenigstens eine temperaturabhängige Widerstandselement (25) in Form einer Spulenwicklung ausgestaltet ist.

3. Elektromotor (9) nach Anspruch 1 oder 2,
**dadurch gekennzeichnet, dass** die wenigstens eine Aussparung (22) zumindest teilweise axial zu einer Statorachse (SA) verläuft.

4. Elektromotor (9) nach wenigstens einem der Ansprüche 1 bis 3,
**dadurch gekennzeichnet, dass** die wenigstens eine Aussparung (22) in einer radialen Ausrichtung zu einem Polzahn (19) des Stators (16) positioniert ist.

5. Elektromotor (9) nach wenigstens einem der Ansprüche 1 bis 4,
**dadurch gekennzeichnet, dass** in radialer Ausrichtung zu jedem Polzahn (19) eine Aussparung (22) positioniert ist.

6. Elektromotor (9) nach wenigstens einem der Ansprüche 1 bis 5,
**dadurch gekennzeichnet, dass** die wenigstens eine Aussparung (22) wenigstens teilweise mit einem Verbindungsmaterial befüllt ist.

7. Elektromotor (9) nach Anspruch 6,
**dadurch gekennzeichnet, dass** das Verbindungsmaterial wenigstens teilweise als Duroplast oder keramischer Mörtel ausgestaltet ist.

8. Elektromotor (9) nach wenigstens einem der Ansprüche 1 bis 7,
**dadurch gekennzeichnet, dass** das wenigstens eine temperaturabhängige Widerstandselement (25) als Hochlastwiderstand ausgestaltet ist.

9. Stator (16) für einen Elektromotor (9) nach wenigstens einem der Ansprüche 1 bis 8.

10. Werkzeugmaschine (1) mit einem Elektromotor (9) nach wenigstens einem der Ansprüche 1 bis 8.

11. Verfahren zum Bestimmen eines Temperaturwertes an einem Elektromotor (9) enthaltend eine Energieversorgung (5), einen Stator (16) mit einem Statorblechpaket (18) und einen relativ zu dem Statorblechpaket (18) rotierbaren Rotor (17), eine Speichereinheit (29) sowie eine Steuereinrichtung (12) mit einer Vorrichtung (27) zum Erfassen von Spannungswerten und einer Vorrichtung (28) zum Erfassen von Stromstärkewerten, wobei an einer Außenmantelfläche (23) des Statorblechpakets (18) wenigstens eine Aussparung (22) zur Aufnahme wenigstens eines temperaturabhängigen Widerstandselements (25) enthalten ist,
**gekennzeichnet durch** die Verfahrensschritte:
- Anlegen einer elektrischen Spannung an das Widerstandselement (25) durch die Energieversorgung (5);
- Erfassen eines Spannungswerts durch die Vorrichtung (27) zum Erfassen von Spannungswerten;
- Erfassen eines Stromstärkewerts durch die Vorrichtung (28) zum Erfassen von Stromstärkewerten;
- Ermitteln eines Widerstandswerts als Quotient aus dem Spannungswert sowie dem Stromstärkewert; und
- Bestimmen eines Temperaturwertes durch Abgleich des Widerstands mit in der Speichereinheit (29) hinterlegten Referenzwerten.
